# EUROPÄISCHE PATENTSCHRIFT

(11) **EP 3 999 733 B1**
(45) Veröffentlichungstag und Bekanntmachung des Hinweises auf die Patenterteilung: **05.06.2024**
(21) Anmeldenummer: 20745188.1
(22) Anmeldetag: 23.07.2020
(51) Int. Cl.: F02M 53/04

(54) **KRAFTSTOFFINJEKTOR**
FUEL INJECTOR
INJECTEUR DE CARBURANT

(30) Priorität: 24.07.2019 DE 102019120046
(43) Veröffentlichungstag der Anmeldung: 25.05.2022
(73) Patentinhaber: Liebherr-Components Deggendorf GmbH, 94469 Deggendorf (DE)
(72) Erfinder: HÖLLBACHER, Markus, 5412 Puch (AT); SCHMID, Fabian, 94469 Deggendorf (DE)
(74) Vertreter: Laufhütte, Dieter
(86) Internationale Anmeldenummer: PCT/EP2020/070829
(87) Internationale Veröffentlichungsnummer: WO 2021/013943

(56) Entgegenhaltungen:
- DE-A1-102013 006 420
- DE-A1-102016 211 477

## Beschreibung

Die vorliegende Erfindung betrifft einen Kraftstoffinjektor mit einem Hitzeschild.

Bei Kraftstoffinjektoren, insbesondere bei solchen die sich für "Dual-Fuel"-Anwendungen eignen, ist es oftmals erforderlich eine Düsenkuppe des Kraftstoffinjektors zu kühlen.

Unter "Dual-Fuel"-Anwendungen versteht man die Möglichkeit, einen Motor nicht nur mit einer bestimmten Kraftstoffart betreiben zu können, sondern mehrere voneinander verschiedene Kraftstoffarten zum Betrieb des Motors heranziehen zu können. So gibt es Motoren die neben einem LFO (engl. für: light fuel oil), wie z.B. Diesel auch mit LNG bzw. LPG (engl. für liquefied natural gas bzw. liquefied petroleum gas), also mit Flüssigerdgas oder Autogas betrieben werden können.

Problematisch bei solchen "Dual-Fuel"-Motoren ist, dass der für das LFO vorgesehene Kraftstoffinjektor bei einem Betrieb mit LNG oder LPG nur eine sehr geringe Menge oder auch gar kein LFO fördert. Das LNG bzw. LPG wird nämlich in der Regel über das Saugrohr in die Brennkammer zugeführt, so dass keine nennenswerten Volumina von LFO durch den Injektor in den Brennraum gefördert werden. Dies führt dazu, dass der dem Brennraum zugewandte Bereich des Injektors stark erhitzt wird, da das normalerweise durch die Injektorspitze strömende LFO in dieser Betriebsart nicht oder nur sehr eingeschränkt strömt und der sich durch das Fördern des (im Vergleich zu in der Brennkammer herrschenden Temperatur) kühlen LFO ergebende Kühleffekt nicht einstellen kann. So werden bei einer solchen Betriebsart typischerweise nur Kleinstmengen an LFO in den Brennraum gefördert, damit eine verlässliche Entzündung des Gasgemisches erfolgt.

Daher ist es aus dem Stand der Technik bekannt, ein Dreh- oder Frästeil auf der der Brennkammer zugewandten Seite des Düsenkörpers als Hitzeschild vorzusehen, um einen Zwischenraum zwischen Hitzeschild und Düsenkörper zu bilden, in dem ein Kühlfluid zum Kühlen des Injektors strömen kann.

Ein solcher Stand der Technik ist aus der DE 10 2013 006 420 A1 bekannt. Hierin ist zudem in dem Zwischenraum zwischen Hitzeschild und Düsenkörper ein Element zur Strömungsführung eines Kühlfluids angeordnet.

Es ist das Ziel der vorliegenden Erfindung, den aus dem Stand der Technik bekannten Kraftstoffinjektor mit Hitzeschild zu verbessern.

Dies gelingt mit einem Kraftstoffinjektor, der sämtliche Merkmale des Anspruchs 1 aufweist. Vorteilhafte Ausgestaltungen der Erfindung sind dabei in den abhängigen Ansprüchen wiedergegeben.

Erfindungsgemäß ist vorgesehen, dass der Kraftstoffinjektor einen Düsenkörper mit einem Hohlraum zum Einführen einer Düsennadel, eine Düsenspitze, die an einem Längsende des Düsenkörpers vorgesehen ist und einen Öffnungskanal zum Auslassen von Kraftstoff aufweist, und einen Hitzeschild zum Kühlen der Düsenspitze umfasst, das eine Ausnehmung zum Durchführen eines mit dem Öffnungskanal versehenen Düsenspitzenabschnitts aufweist und dichtend an dem Düsenkörper angefügt ist, wobei über einen Zulauf und einen Ablauf ein Zwischenraum zwischen Düsenkörper und Hitzeschild mit einem Kühlfluid versorgbar ist. Die Erfindung ist dadurch gekennzeichnet, dass in dem Zwischenraum mindestens ein Element zur Strömungsführung für ein zwischen Zulauf und Ablauf strömendes Kühlfluid vorgesehen ist.

Durch das gezielte Anordnen des Elements zur Strömungsführung kann ein im Zwischenraum eingespeistes Kühlfluid gezielt an eben jene Bereiche herangeführt werden, die besonderer Kühlung bedürfen, da diese beispielsweise exponiert in die Brennkammer hineinragen oder aber Bereichen mit einer besonders hohen Temperatur ausgesetzt sind. Das gezielte Führen des Kühlfluids vom Zulauf hin zum Ablauf ist daher deutlich effektiver in seiner Kühlwirkung für den Injektor als das im Stand der Technik angewandte Vorgehen, wonach der Zwischenraum ohne das Vorsehen von Elementen zur Strömungsführung mit Kühlfluid durchströmt wird.

Weiter vorteilhaft ist, dass durch das Vorsehen des mindestens einen Elements zur Strömungsführung eine verbesserte Wärmeleitung von der der Brennkammer zugewandten Außenseite des Hitzeschilds zu dem im Zwischenraum zirkulierenden Kühlfluid ermöglicht wird, so dass eine verbesserte Effizienz bei der Kühlung des Düsenkörpers erreicht wird.

Ein Element zur Strömungsführung kann dabei ein von mindestens vier Seiten von Kühlfluid umströmtes Element darstellen. Nach der Erfindung ist ein solches Element nicht durch das Hitzeschild selbst oder den Düsenkörper gegeben, da diese Bestandteile lediglich den Zwischenraum bilden, indem das Element anzuordnen ist aber keinen ordnenden Einfluss auf das Strömen eines Kühlfluids vom Zulauf hin zum Ablauf innerhalb des Zwischenraums besitzen.

Nach der Erfindung kann vorgesehen sein, dass das Element zur Strömungsführung zusätzlich zu einem dichtenden, umlaufenden Abschluss zum Düsenkörper bzw. zu dem durch die Öffnung geführten Düsenspitzenabschnitt vorgesehen ist.

Nach einer weiteren optionalen Fortbildung der Erfindung kann sich das Element zur Strömungsführung von der zum Düsenkörper zugewandten Innenseite des Hitzeschilds in Richtung Düsenkörper erstrecken. So kann das Element zur Strömungsführung direkt von dem Hitzeschild abgehen und sich in Richtung des Düsenkörpers erstrecken. Nach der Erfindung ist vorgesehen, dass das mindestens eine Element zur Strömungsführung einstückig mit dem Hitzeschild ausgeformt ist.

Vorzugsweise kann sich das im Zwischenraum angeordnete Element zur Strömungsführung vom Hitzeschild zum Düsenkörper erstrecken, um die Festigkeit des Hitzeschilds zu verbessern. So ist in einem zusammengefügten Zustand von Hitzeschild und Düsenkörper, bei dem der Düsenabschnitt mit den Öffnungen zum Ausgeben von Kraftstoff durch die Ausnehmung des Hitzeschilds gesteckt ist, eine weitere Stützwirkung durch das mindestens eine Element zur Strömungsführung gegeben, da sich dieses mindestens eine Element an den Düsenkörper anlegt bzw. diesen berührt. So erhält das Hitzeschild eine verbesserte Stabilität, da es nun nicht mehr allein nur mit seinem Außenrand und der Ausnehmung an dem Düsenkörper anliegt, sondern eine weitere Verbindung durch das mindestens eine Element zur Strömungsführung vorhanden ist.

Vorzugsweise ist das Hitzeschild drehsymmetrisch und/oder rotationssymmetrisch. Dies erleichtert die Fertigung des Hitzeschilds wie auch das Anbringen an dem Düsenkörper.

Darüber hinaus ist nach der Erfindung vorgesehen, dass das Hitzeschild einstückig ausgebildet ist, vorzugsweise durch ein additives Verfahren gebildet ist. Durch die Ausbildung des Hitzeschilds in einem additiven Verfahren kann vorgesehen sein, dass das Hitzeschild einschließlich des mindestens einen Elements zur Strömungsführung bei seiner Erzeugung direkt auf den Düsenkörper aufgebracht wird. Ein separater Schritt zum Befestigen des Hitzeschilds, nachdem es erzeugt worden ist, kann somit entfallen. Die Kosten bei der Herstellung bzw. Montage des Kraftstoffinjektors mit Hitzeschild sinken somit.

Nach einer optionalen Fortbildung der Erfindung kann vorgesehen sein, dass das mindestens eine Element zur Strömungsführung eine Rippenform, eine Nadelform, eine Ringform, eine Stabform und/oder eine Wabenform aufweist.

Zudem kann nach der Erfindung vorgesehen sein, dass das mindestens eine Element zur Strömungsführung eine Vielzahl von Öffnungen aufweist, die senkrecht zur Längsrichtung des Düsenkörpers orientiert sind. So kann das Element also eine Wand mit einer Vielzahl von Löchern zum Durchtritt für Kühlfluid darstellen, um die Effektivität beim Übertragen der Temperatur auf das Kühlfluid weiter zu verbessern.

Nach einer weiteren optionalen Fortbildung der Erfindung ist das mindestens eine Element zur Strömungsführung dazu ausgelegt, eine Kühlfluid-Strömung gezielt auf temperaturmäßig stark beanspruchte Bereiche des Düsenkörpers zu richten.

Das Kühlfluid strömt also aufgrund des mindestens einen Elements zur Strömungsführung nun nicht mehr ungesteuert von Zulauf zum Ablauf des Zwischenraums, sondern wird gezielt vom Zulauf auf einen temperaturmäßig stark beanspruchten Bereich geleitet, bevor es dem Ablauf zugeführt wird.

Nach einer weiteren optionalen Modifikation der Erfindung ist das mindestens eine Element zur Strömungsführung dazu ausgelegt ist, eine Strömung des Kühlfluids vom Zulauf hin zum Ablauf zu drosseln. Die Drosselung der Strömung des Kühlfluids, die durch eine geschickte Anordnung des mindestens einen Elements zur Strömungsführung erfolgt, ist vorteilhaft, da nun die Drosselwirkung nicht mehr im Düsenkörper umgesetzt werden muss, sondern im Bereich des Hitzeschilds erfolgt. So kann bei unterschiedlich gewünschten Drosselstärken derselbe Düsenkörper verwendet und lediglich ein an die Soll-Drosselstärke angepasstes Hitzeschild aufgesetzt werden. Dies ermöglicht eine verbesserte Skalierung bei der Produktion des Düsenkörpers wobei dennoch eine spezifische Drosselstärke des Kühlfluids möglich ist.

Ferner kann vorgesehen sein, dass ein Kühlmedien-Zulauf und ein Kühlmedien-Ablauf im Düsenkörper angeordnet sind, die fluidisch über den durch das Hitzeschild und den Düsenkörper gebildeten Zwischenraum verbunden sind.

Nach einer weiteren Ausgestaltung der Erfindung ist der Injektor dazu ausgelegt, Diesel durch seine Düsenspitze auszugeben.

Nach der Erfindung kann vorgesehen sein, dass das Hitzeschild eine im Wesentlichen schalenartige Grundform aufweist, in dessen Mitte die Ausnehmung zum Durchführen des mit dem Öffnungskanal versehenen Düsenspitzenabschnitts angeordnet ist.

Dabei kann das Hitzeschild am Rand seiner schalenartigen Grundform und/oder an dessen mittiger Ausnehmung mit dem Düsenkörper verbunden sein, vorzugsweise verschweißt oder verlötet sein.

Auch kann nach der Erfindung vorgesehen sein, dass der Injektor zusammen mit dem Hitzeschild entlang der Längsachse des Düsenkörpers drehsymmetrisch und/oder rotationssymmetrisch ist.

Weitere Merkmale, Vorteile und Eigenschaften werden anhand der nachfolgenden Figurenbeschreibung ersichtlich. Dabei zeigen:
- Fig. 1:: eine Schnittansicht eines mit einem Hitzeschild versehenen Kraftstoffinjektors, und
- Figs. 2a -f:: unterschiedliche Ausgestaltungen des bei einem erfindungsgemäßen Injektor verwendeten Hitzeschilds.

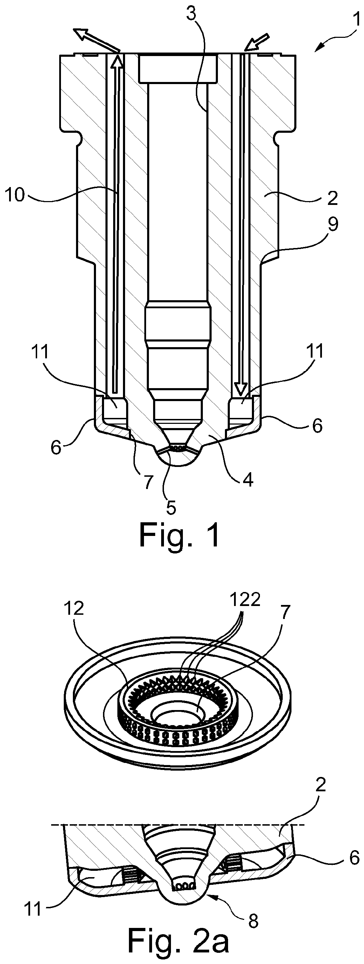

Fig. 1 zeigt eine Schnittansicht eines Kraftstoffinjektors 1. Man erkennt einen Düsenkörper 2 mit einem in der Mitte angeordneten Hohlraum 3, der zum Einsetzen einer Düsennadel dient. Durch das Anheben bzw. das Absenken der Düsennadel werden die Öffnungen 5 zum Auslassen von Kraftstoff verschlossen bzw. geöffnet, so dass eine bestimmte Menge an Kraftstoff in den Brennraum eines Motors eingeführt werden kann.

Wie bereits im einleitenden Teil der Beschreibung erwähnt, ist es vor allem bei Dual-Fuel-Injektoren von Vorteil, wenn diese an ihrer zum Brennraum zugewandten Seite gekühlt werden.

Hierfür ist ein Hitzeschild 6 vorgesehen, dass auf den Düsenkörper 2 aufgesetzt wird und vorteilhafterweise mit diesem in dichter Art und Weise verbunden ist. Das Hitzeschild 6 weist dabei eine Ausnehmung 7 auf, durch welche der Düsenspitzenabschnitt 8 des Düsenkörpers 2 hindurchtritt. Die Öffnungen 5 zum Auslassen von Kraftstoff stoßen demnach auch bei einem aufgesetzten Hitzeschild 6 weiterhin in den Brennraum hinein, so dass aus ihnen ungehindert Kraftstoff austreten kann.

Durch das Aufsetzen des Hitzeschilds 6 auf den Düsenkörper 2 wird ein Zwischenraum 11 gebildet, der zum Durchströmen von einem Kühlfluid geeignet ist. Dadurch kann die hohe Temperatur, welche vor allem bei einem alternativen Betrieb der Brennkammer ohne oder nur mit einem sehr geringen Volumenanteil von durch die Öffnungen 5 ausgegebenen Kraftstoff vonstattengeht, im Düsenkörper 2 abgesenkt werden.

Über einen Zulauf 9 wird dabei Kühlfluid in den Zwischenraum 11 eingebracht, das nach einem Erwärmen über einen Ablauf 10 abgeführt wird. Der Zulauf 9 und der Ablauf 10 können dabei Bohrungen in dem Düsenkörper sein, die an der zur Brennkammer zugewandten Seite des Düsenkörpers einen Zulauf 9 bzw. Ablauf 10 erzeugen. Um den Zulauf 9 und den Ablauf 10 fluidisch miteinander zu verbinden wird das Hitzeschild 6 auf den Düsenkörper 2 gesetzt, so dass ein Kühlfluid vom Zulauf 9 über den Zwischenraum 11 zum Ablauf 10 strömen kann. Der dabei umströmte Bereich des Düsenkörpers 2 sowie auch die angrenzenden in den Brennraum ragenden Teile des Injektors (wie der Düsenspitzenabschnitt 8) werden durch das Kühlfluid in seiner Temperatur reguliert.

Fig. 2a zeigt dabei eine perspektivische Ansicht eines Hitzeschilds 6 bei einem erfindungsgemäßen Injektor 1 sowie eine darunter angeordnete Schnittansicht, die den Spitzenbereich des Injektors 1 mit diesem Hitzeschild 6 darstellt.

Um die Strömung in dem durch den Düsenkörper 2 und das Hitzeschild 6 geschaffenen Zwischenraum 11 zu steuern, ist um die Ausnehmung 7 herum ein Element zur Strömungsführung 12 in Form einer umlaufenden Wand, bzw. eines die Ausnehmung 7 umschließenden Rings vorgesehen, die eine Vielzahl von radial nach außen gerichteten Öffnungen 122 besitzt. Diese Wand erstreckt sich von der zum Düsenkörper 2 zugewandten Seite des Hitzeschilds 6 und kontaktiert in einem zusammengefügten Zustand den Düsenkörper 2 im Bereich oder nahe des Bereichs der Düsenkuppe 8. Die Struktur der mit Löchern 122 versehenen Wand verbessert den Wärmeaustausch mit dem im Zwischenraum strömenden Kühlfluid, so dass ein verbesserter Wärmeabtrag erfolgt und stärkt zusätzlich die Festigkeit des Hitzeschilds 6, das aufgrund der exponierten Lage im Brennraum hohen Belastungen ausgesetzt ist. Der mechanische Verschleiß verringert sich somit, wobei gleichzeitig die Effizienz der Kühlung verbessert wird.

Durch den drehsymmetrischen Aufbau des Hitzeschilds 6, der Aufgrund der hohen Anzahl an Öffnungen 122 quasi rotationssymmetrisch ist, muss bei einem Anfügen des Hitzeschilds 6 die Orientierung nicht extra beachtet werden.

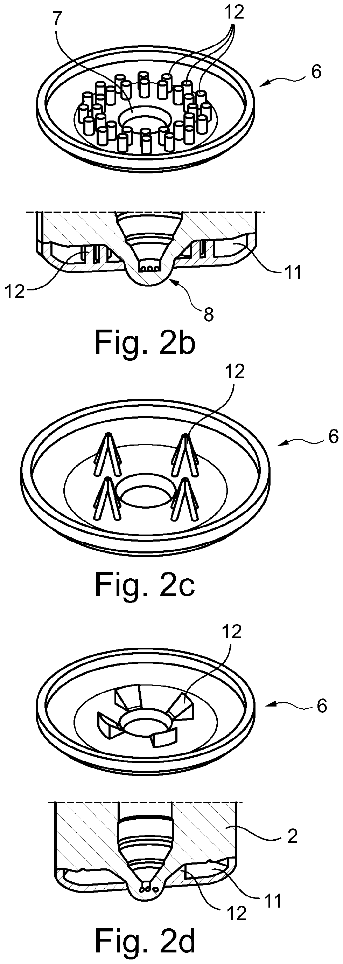

Fig. 2b zeigt eine weitere Ausgestaltung eines Hitzeschilds 6 wie sie bei dem erfindungsgemäßen Injektor 1 zum Einsatz kommen könnte. Wie in der vorhergehenden Fig. 2a wird auch hier eine perspektivische Ansicht des Hitzeschilds 6 sowie eine Schnittansicht im verbundenen Zustand mit dem Düsenkörper 2 gezeigt.

Der schalenartige Grundaufbau des Hitzeschilds 6 ist im Wesentlichen identisch zu demjenigen aus Fig. 2a. Auch weist das Hitzeschild 6 eine in der Mitte angeordnete kreisförmige Ausnehmung 7 zum Durchführen eines Düsenspitzenabschnitts 8 auf. Der Grundkörper des Hitzeschilds 6 ist dabei um eine Mittenachse, die mittig durch die Ausnehmung verläuft rotationssymmetrisch.

Die Elemente zur Strömungsführung 12, die vorliegend auch gleichzeitig eine Stützfunktion innehaben, sind vorliegend stabartig ausgebildet und entlang zweier Kreise mit unterschiedlichem Abstand zur Mitte der Ausnehmung angeordnet. Dem Fachmann ist klar, dass die exakte Anordnung der stabartigen Elemente auch gewissen Variationen unterzogen werden kann, ohne die erreichten Vorteile der Erfindung aufzugeben. So ist bspw. das Vorsehen von nur einer Reihe von auf einem Kreis angeordneten stabartigen Elementen oder auch ein zueinander versetztes Anordnen der auf zwei oder mehreren Reihen verteilen stabartigen Elementen von der Erfindung umfasst.

In der Schnittansicht sieht man, wie die stabartigen Elemente sich gegen den Düsenkörper abstützen und so zu einer verbesserten Festigkeit des Hitzeschilds 6 beitragen. Darüber hinaus ist sowohl der Zulauf 9 wie auch der Ablauf 10 an einer radial entfernteren Position angeordnet wie der äußere Ring an stabartigen Elementen. Dies führt dazu, dass bei einer Strömung zwischen Zu- und Ablauf 9, 10 die stabartigen Elemente 12 umströmt werden, so dass eine besonders effektive Wärmeableitung des Hitzeschilds 6 gewährleistet ist. Da die stabartigen Elemente einstückig von der Innenseite des Hitzeschilds 6 abgehen können, kann eine an der Außenseite herrschende hohe Temperatur besonders effektiv abgesenkt werden.

Fig. 2c zeigt eine weitere Variante des Hitzeschilds 6 mit Elementen zur Strömungsführung, das im Wesentlichen einen ähnlichen Grundaufbau besitzt wie die vorhergehenden Hitzeschilde aus den Figuren 2a und 2b.

Aus der perspektivischen Ansicht der Figur kann man entnehmen, dass vier um die Ausnehmung herum beabstandete Strukturen vorgesehen sind, welche jeweils aus vier von unten nach oben zusammenlaufenden Streben gebildet sind. Diese Strukturen sind dabei entlang eines um die Ausnehmung 7 angeordneten Kreises mit gleichem Abstand angeordnet. Ähnlich wie in den vorangegangenen Ausführungen dienen dabei die Strukturen 12 zum Verbessern der Festigkeit und gleichzeitig zum Ableiten der von der Außenseite auf das Hitzeschild 6 einwirkenden Wärme.

Fig. 2d zeigt eine weitere Variante des Hitzeschilds 6 mit Elementen zur Strömungsführung 12, das im Wesentlichen einen ähnlichen Grundaufbau besitzt wie die vorhergehenden Hitzeschilde aus den Figuren 2a-c.

Hier sind keilartige Strukturen vorgesehen, deren abgeschrägte Fläche jeweils zu der Ausnehmung 7 benachbart ist. Somit kann die kegelartig spitz zulaufende Form des Düsenspitzenabschnitts 8 aufgenommen werden, so dass dabei diese gestützt und eine Festigkeit des Hitzeschilds 6 verbessert wird.

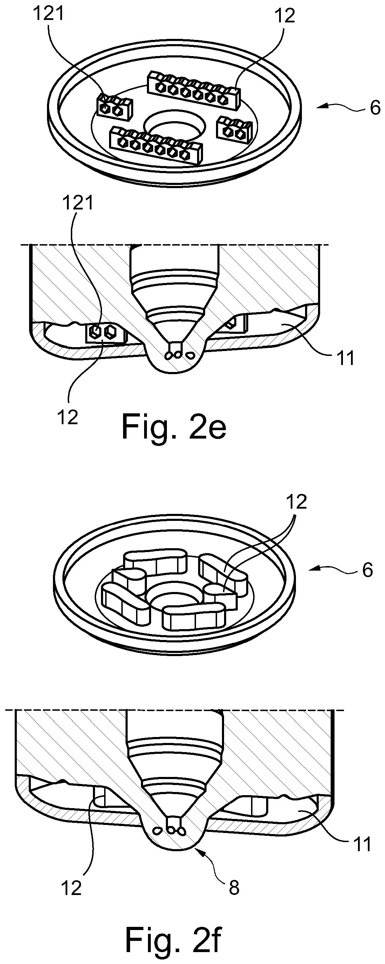

Fig. 2e zeigt eine weitere Variante des Hitzeschilds 6 mit Elementen zur Strömungsführung 12, das im Wesentlichen einen ähnlichen Grundaufbau besitzt wie die vorhergehenden Hitzeschilde aus den Figuren 2a-d.

Als Elemente zur Strömungsführung sind hierbei wandartige Strukturen mit wabenförmigen Öffnungen 121 vorgesehen. Die insgesamt vier dargestellten wandartigen Strukturen sind dabei parallel zueinander ausgerichtet, wobei der Zulauf und der Ablauf vorteilhafterweise so angeordnet sind, dass eine direkte geradlinige Strömung von Zulauf zum Ablauf die wabenartigen Öffnungen in den wandartigen Strukturen durchströmt.

Die Schnittdarstellung zeigt auch hier, dass die wandartigen Strukturen die Festigkeit des Hitzeschilds 6 stärken und sich von der Innenseite des Hitzeschilds 6 hin zum Düsenkörper 2 erstrecken.

Fig. 2f zeigt eine weitere Variante des Hitzeschilds 6 mit Elementen zur Strömungsführung 12, das im Wesentlichen einen ähnlichen Grundaufbau besitzt wie die vorhergehenden Hitzeschilde aus den Figuren 2a-e.

Wie man in der perspektivischen Ansicht erkennt sind die Elemente zur Strömungsführung strömungsoptimiert ausgeformt, so dass eine gezielte Anströmung besonders erwärmter Bereiche ermöglicht wird.

Eines der mehreren Elemente 12 besitzt dabei in der Draufsicht die Form eines Tropfens, dessen spitzes Ende von der Ausnehmung abgewandt ist und mit seinem runden Ende zu der Ausnehmung 7 benachbart ist. Dadurch wird gezielt ein Strömungskanal um die Ausnehmung herum erzeugt, wodurch das gezielte Führen einer vom Zulauf zum Ablauf auftretenden Strömung ermöglicht wird.

## Patentansprüche

1. Kraftstoffinjektor (1), umfassend:
einen Düsenkörper (2) mit einem Hohlraum (3) zum Einführen einer Düsennadel,
eine Düsenspitze (4), die an einem Längsende des Düsenkörpers (2) vorgesehen ist und einen Öffnungskanal (5) zum Auslassen von Kraftstoff aufweist, und
ein Hitzeschild (6) zum Kühlen der Düsenspitze (4), das eine Ausnehmung (7) zum Durchführen eines mit dem Öffnungskanal (5) versehenen Düsenspitzenabschnitts (8) aufweist und dichtend an dem Düsenkörper (2) angefügt ist, wobei
über einen Zulauf (9) und einen Ablauf (10) ein Zwischenraum (11) zwischen Düsenkörper (2) und Hitzeschild (6) mit einem Kühlfluid versorgbar ist, und
in dem Zwischenraum (11) mindestens ein Element (12) zur Strömungsführung für ein zwischen Zulauf (9) und Ablauf (10) strömendes Kühlfluid vorgesehen ist,
**dadurch gekennzeichnet, dass**
das Element zur Strömungsführung einstückig mit dem Hitzeschild ausgeformt ist, wobei vorzugsweise
das Element zur Strömungsführung und das Hitzeschild mit einem additiven Verfahren direkt auf den Düsenkörper aufgebracht sind.

2. Injektor (1) nach Anspruch 1, wobei das Element (12) zur Strömungsführung zusätzlich zu einem dichtenden, umlaufenden Abschluss zum Düsenkörper (2) bzw. zu dem durch die Öffnung geführten Düsenspitzenabschnitt (8) vorgesehen ist.

3. Injektor (1) nach einem der vorhergehenden Ansprüche, wobei sich das Element (12) zur Strömungsführung von der zum Düsenkörper (2) zugewandten Innenseite des Hitzeschilds (6) in Richtung Düsenkörper (2) erstreckt.

4. Injektor (1) nach einem der vorhergehenden Ansprüche, wobei sich das im Zwischenraum (11) angeordnete Element (12) zur Strömungsführung vom Hitzeschild (6) zum Düsenkörper (2) erstreckt, um die Festigkeit des Hitzeschilds (6) zu verbessern.

5. Injektor (1) nach einem der vorhergehenden Ansprüche, wobei das Hitzeschild (6) drehsymmetrisch und/oder rotationssymmetrisch ist.

6. Injektor (1) nach einem der vorhergehenden Ansprüche, wobei das mindestens eine Element (12) zur Strömungsführung eine Rippenform, eine Nadelform, eine Ringform, eine Stabform und/oder eine wabenform aufweist.

7. Injektor (1) nach einem der vorhergehenden Ansprüche, wobei das mindestens eine Element (12) zur Strömungsführung eine Vielzahl von Öffnungen aufweist, die senkrecht zur Längsrichtung des Düsenkörpers (2) orientiert sind.

8. Injektor (1) nach einem der vorhergehenden Ansprüche, wobei das mindestens eine Element (12) zur Strömungsführung dazu ausgelegt ist, eine Kühlfluid-Strömung gezielt auf temperaturmäßig stark beanspruchte Bereiche des Düsenkörpers (2) zu richten.

9. Injektor (1) nach einem der vorhergehenden Ansprüche, wobei das mindestens eine Element (12) zur Strömungsführung dazu ausgelegt ist, eine Strömung des Kühlfluids vom Zulauf (9) hin zum Ablauf (10) zu drosseln.

10. Injektor (1) nach einem der vorhergehenden Ansprüche, wobei ein Kühlmedien-Zulauf (9) und ein Kühlmedien-Ablauf (10) im Düsenkörper (2) angeordnet sind, die fluidisch über den durch das Hitzeschild (6) und den Düsenkörper (2) gebildeten Zwischenraum (11) verbunden sind.

11. Injektor (1) nach einem der vorhergehenden Ansprüche, wobei der Injektor (1) dazu ausgelegt ist, Diesel durch seine Düsenspitze (4) auszugeben.

12. Injektor (1) nach einem der vorhergehenden Ansprüche, wobei das Hitzeschild (6) eine im Wesentlichen schalenartige Grundform aufweist, in dessen Mitte die Ausnehmung (7) zum Durchführen des mit dem Öffnungskanal (5) versehenen Düsenspitzenabschnitts (8) angeordnet ist.

13. Injektor (1) nach Anspruch 13, wobei das Hitzeschild (6) am Rand seiner schalenartigen Grundform und/oder an dessen mittiger Ausnehmung (7) mit dem Düsenkörper (2) verbunden ist, vorzugsweise verschweißt oder verlötet ist.

14. Injektor (1) nach einem der vorhergehenden Ansprüche, wobei der Injektor (1) zusammen mit dem Hitzeschild (6) entlang der Längsachse des Düsenkörpers (2) drehsymmetrisch und/oder rotationssymmetrisch ist.

## Claims

1. Fuel injector (1) comprising:
a nozzle body (2) having a cavity (3) for inserting a nozzle needle,
a nozzle tip (4) provided at a longitudinal end of the nozzle body (2) and having an opening channel (5) for discharging fuel, and
a heat shield (6) for cooling the nozzle tip (4), said heat shield having a recess (7) for the passage of a nozzle tip section (8) provided with the opening channel (5) and being attached to the nozzle body (2) in a sealing manner, wherein
a gap (11) between the nozzle body (2) and the heat shield (6) can be supplied with a cooling fluid via an inlet (9) and an outlet (10), and
at least one element (12) for guiding the flow of a cooling fluid flowing between the inlet (9) and the outlet (10) is provided in the gap (11),
**characterised in that**
the element for guiding the flow is formed in one piece with the heat shield, wherein preferably
the element for guiding the flow and the heat shield are applied directly to the nozzle body using an additive method.

2. Injector (1) according to claim 1, wherein the element (12) for guiding the flow is provided in addition to a sealing, circumferential closure to the nozzle body (2) or to the nozzle tip section (8) guided through the opening.

3. Injector (1) according to any one of the preceding claims, wherein the element (12) for guiding the flow extends from the inside of the heat shield (6) facing the nozzle body (2) in the direction of the nozzle body (2).

4. Injector (1) according to any one of the preceding claims, wherein the element (12) for guiding the flow arranged in the gap (11) extends from the heat shield (6) to the nozzle body (2) to improve the stability of the heat shield (6).

5. Injector (1) according to any one of the preceding claims, wherein the heat shield (6) is torsionally symmetrical and/or rotationally symmetrical.

6. Injector (1) according to any one of the preceding claims, wherein the at least one element (12) for guiding the flow has a rib shape, a needle shape, a ring shape, a rod shape and/or a honeycomb shape.

7. Injector (1) according to any one of the preceding claims, wherein the at least one element (12) for guiding the flow has a plurality of openings, which are oriented perpendicular to the longitudinal direction of the nozzle body (2).

8. Injector (1) according to any one of the preceding claims, wherein the at least one element (12) for guiding the flow is designed to direct a cooling fluid flow specifically to areas of the nozzle body (2) subject to high temperatures.

9. Injector (1) according to any one of the preceding claims, wherein the at least one element (12) for guiding the flow is designed to restrict the flow of cooling fluid from the inlet (9) to the outlet (10).

10. Injector (1) according to any one of the preceding claims, wherein a cooling medium inlet (9) and a cooling medium outlet (10) are arranged in the nozzle body (2), which are fluidically connected via the gap (11) formed by the heat shield (6) and the nozzle body (2).

11. Injector (1) according to any one of the preceding claims, wherein the injector (1) is designed to deliver diesel through its nozzle tip (4).

12. Injector (1) according to any one of the preceding claims, wherein the heat shield (6) has an essentially shell-like basic shape, in the centre of which the recess (7) for passing through the nozzle tip section (8) provided with the opening channel (5) is arranged.

13. Injector (1) according to claim 13, wherein the heat shield (6) is connected, preferably welded or soldered, to the nozzle body (2) at the edge of its shell-like basic shape and/or at its central recess (7).

14. Injector (1) according to any one of the preceding claims, wherein the injector (1) together with the heat shield (6) is torsionally symmetrical and/or rotationally symmetrical along the longitudinal axis of the nozzle body (2).

## Revendications

1. Injecteur de carburant (1), comprenant :
un corps de buse (2) doté d'une cavité (3) permettant l'introduction d'une aiguille d'injection,
une pointe de buse (4) qui est située sur une extrémité longitudinale du corps de buse (2) et qui présente un canal d'ouverture (5) permettant la sortie de carburant, et
un écran thermique (6) destiné au refroidissement de la pointe de buse (4), qui présente un évidement (7) destiné au passage d'une partie de pointe de buse (8) pourvue du canal d'ouverture (5) et qui est accolé de manière étanche au corps de buse (2), dans lequel
un espace intermédiaire (11) entre le corps de buse (2) et l'écran thermique (6) peut être alimenté en fluide de refroidissement par le biais d'une arrivée (9) et d'une évacuation (10), et
au moins un élément (12) destiné au guidage de l'écoulement pour un fluide de refroidissement s'écoulant entre l'arrivée (9) et l'évacuation (10) est prévu dans l'espace intermédiaire (11),
**caractérisé en ce que**
l'élément destiné au guidage de l'écoulement est façonné d'un seul tenant avec l'écran thermique, dans lequel, de préférence,
l'élément destiné au guidage de l'écoulement et l'écran thermique sont fabriqués directement sur le corps de buse par un procédé de fabrication additive.

2. Injecteur (1) selon la revendication 1, dans lequel l'élément (12) destiné au guidage de l'écoulement est prévu en plus d'un élément de terminaison périphérique étanchéifiant par rapport au corps de buse (2) ou à la partie de pointe de buse (8) passant à travers l'ouverture.

3. Injecteur (1) selon l'une des revendications précédentes, dans lequel l'élément (12) destiné au guidage de l'écoulement s'étend depuis la face intérieure de l'écran thermique (6) orientée vers le corps de buse (2) en direction du corps de buse (2).

4. Injecteur (1) selon l'une des revendications précédentes, dans lequel l'élément (12) destiné au guidage de l'écoulement agencé dans l'espace intermédiaire (11) s'étend de l'écran thermique (6) au corps de buse (2) afin d'améliorer la solidité de l'écran thermique (6).

5. Injecteur (1) selon l'une des revendications précédentes, dans lequel l'écran thermique (6) est à symétrie de rotation et/ou à symétrie de révolution.

6. Injecteur (1) selon l'une des revendications précédentes, dans lequel l'au moins un élément (12) destiné au guidage de l'écoulement présente une forme de nervure, une forme d'aiguille, une forme d'anneau, une forme de barre et/ou une forme d'alvéole.

7. Injecteur (1) selon l'une des revendications précédentes, dans lequel l'au moins un élément (12) destiné au guidage de l'écoulement présente une pluralité d'ouvertures qui sont orientées perpendiculairement à la direction longitudinale du corps de buse (2).

8. Injecteur (1) selon l'une des revendications précédentes, dans lequel l'au moins un élément (12) destiné au guidage de l'écoulement est conçu pour diriger un écoulement de fluide de refroidissement de manière ciblée sur des zones à forte sollicitation thermique du corps de buse (2).

9. Injecteur (1) selon l'une des revendications précédentes, dans lequel l'au moins un élément (12) destiné au guidage de l'écoulement est conçu pour restreindre un écoulement du fluide de refroidissement de l'arrivée (9) à l'évacuation (10).

10. Injecteur (1) selon l'une des revendications précédentes, dans lequel une arrivée (9) de fluide de refroidissement et une évacuation (10) de fluide de refroidissement sont agencées dans le corps de buse (2), lesquelles sont en liaison fluidique par le biais de l'espace intermédiaire (11) formé par l'écran thermique (6) et le corps de buse (2).

11. Injecteur (1) selon l'une des revendications précédentes, l'injecteur (1) étant conçu pour distribuer du diesel par sa pointe de buse (4).

12. Injecteur (1) selon l'une des revendications précédentes, dans lequel l'écran thermique (6) présente une forme de base sensiblement cupuliforme, au milieu de laquelle est agencé l'évidement (7) destiné au passage de la partie de pointe de buse (8) pourvue du canal d'ouverture (5).

13. Injecteur (1) selon la revendication 13, dans lequel l'écran thermique (6) est relié, de préférence soudé ou brasé, au corps de buse (2) au niveau du bord de sa forme de base cupuliforme et/ou de son évidement (7) central.

14. Injecteur (1) selon l'une des revendications précédentes, l'injecteur (1) étant, conjointement avec l'écran thermique (6), à symétrie de rotation et/ou à symétrie de révolution le long de l'axe longitudinal du corps de buse (2).
